# EUROPEAN PATENT APPLICATION

(11) **EP 4 778 890 A1**
(43) Date of publication of application: **22.07.2026**
(21) Application number: 25152902.0
(22) Date of filing: 20.01.2025
(51) Int. Cl.: C01F 17/30, C01G 28/00, C01G 29/00, C01G 30/00, H01M 4/136, H01M 10/0562, C01B 17/20, C01B 19/00, C01F 17/38

(54) **LITHIUM-SCANDIUM AND SODIUM-SCANDIUM PNICTOGENS AND CHALCOGENS**

(71) Applicant: TUMint-Energy Research GmbH, 85748 Garching (DE); Technische Universität München, in Vertretung des Freistaats Bayern, 80333 München (DE)
(72) Inventor: FÄSSLER, Thomas, 81243 München (DE); JIANG, Jingwen, 85386 Eching (DE); KLEIN, Wilhelm, 85716 Unterschleißheim (DE)
(74) Representative: Kraus & Lederer PartGmbB

(57) **Abstract**

The present invention relates a new class of lithium- and sodium-rich solid-state compounds which additionally contain scandium, which significantly improves the ion conductivity. In addition, the invention relates to compositions comprising a mixture of inventive compounds and to a process for preparation of the inventive compounds. Further, the present invention relates to the use thereof as solid electrolytes or in composite cathodes in primary and secondary electrochemical energy storage devices. The invention further relates to solid electrolytes and composite cathodes comprising the inventive compounds and compositions.

## Description

### Background

The invention is in the field of battery research, specifically in the field of materials research on solid-state compounds for new all-solid-state batteries.

Great hopes are currently being pinned on solid electrolyte batteries. They are expected to replace the lithium-ion batteries with liquid electrolytes that are currently used almost exclusively in electric vehicles (but also in other battery-powered devices) in the next few years. The reason for this is the significantly improved operational safety of the solid-state batteries, which do not have the problem of highly flammable liquid electrolytes based on elemental lithium. In addition, no toxic liquids are released if the cells are damaged. Thus, All-solid-state battery (ASSB) is a frontier battery technology with superior potential in in-combustibility based on the thermal stability of inorganic materials, and high energy and power density over the conventional Li-ion batteries, making it the sustainable and promising alternative in electric vehicles and energy storage applications. The new batteries could be charged much faster and e-vehicles could achieve greater ranges than with their current counterparts with liquid electrolytes.

High ionic conductivities are required in the electrolytes for high-power charging and discharging. Comparatively low ionic conductivities have long been a weakness of solid-state electrolytes. Another technical problem is the complex and expensive production of solid-state electrolytes. As a core and indispensable component of ASSBs, solid-state electrolytes (SEs) require high ionic conductivity, negligible electronic conductivity, and electrochemical stability to meet the application demands. Therefore, numerous efforts have been devoted to develop the SEs, which has led to a variety of potential electrolyte materials represented by oxides, sulfides, polymers, and inorganic-organic hybrid electrolytes. Among them, only handful argyrodites Li₆PS₅*X* (*X* = Cl, Br, I), sulfides Li₁₀*M*P₂Si₂ (*M*= Ge, Sn) and their derivatives exhibit excellent ionic conductivities reaching 10⁻² S cm⁻¹ at room temperature. Kraft et al, Inducing High Ionic Conductivity in the Lithium Superionic Argyrodites Li6+xP1-xGexS5I for All-Solid-State Batteries, Journal of the American Chemical Society 2018, 140 (47), 16330-16339; Kraft et al, Influence of Lattice Polarizability on the Ionic Conductivity in the Lithium Superionic Argyrodites Li6PS5X (X = Cl, Br, I), Journal of the American Chemical Society 2017, 139 (31), 10909-10918*;* Zhou et al, New Family of Argyrodite Thioantimonate Lithium Superionic Conductors, Journal of the American Chemical Society 568 2019, 141 (48), 19002-19013*;* Kamaya et al, A lithium superionic conductor, Nature Materials 2011, 10 (9), 682-686*;* Hori et al, Synthesis, structure, and ionic conductivity of solid solution, Li10+δM1+δP2-δS12 (M = Si, Sn). Faraday Discussions 2014, 176 (0), 83-94. The fastest Li⁺ superionic conductor reported in solids is Li_{9.54}[Si_{0.6}Ge_{0.4}]_{1.74}P_{1.44}S_{11.1}Br_{0.3}O_{0.6}, achieving 32 mS·cm⁻¹ at room temperature. Li et al, A Lithium Superionic Conductor for Millimeter-thick Battery Electrode, Science 2023, 381 (6653), 50.

Pristine cubic Na₃PS₄ which exhibited a conductivity of 0.2 mS cm⁻¹ as a glass-ceramic electrolyte which could be improved to 0.46 mS cm⁻¹ using high-purity starting materials. The derivatives Na₃PSe₄ and Na₃SbS₄ have a conductivity of 1-3 mS cm⁻¹ whereas the modifications Na₃₋ₓPS₄₋ₓClₓ (x=6.25%) reaches a conductivity of 1.14 mS cm⁻¹. Na₁₁Sn₂PS₁₂ was reported and exhibited a very high ionic conductivity of 3.7 mS cm⁻¹. The so far highest sodium ion conductivities were achieved in Na_{2.88}Sb_{0.88}W_{0.12}S₄ or Na_{2.9}Sb_{0.9}W_{0.1}S₄ with conductivity values of 32 mS cm⁻¹ and 41 mS cm⁻¹, respectively, at room temperature. Jansen et al, J. Solid State Chem. 1992, 99, 110-119; Hayashi et al, Nat. Commun. 2012, 3, 856; A. Hayashi et al, Journal of Power Sources 2014, 258, 420-423; Zhang et al, Advanced Energy Materials 2015, 5, 1501294; Banerjee et al, Angew. Chem. Int. Ed. 2016, 55, 9634-9638; Chu et al, Sci. Rep. 2016, 6, 33733; Duchardt et al, Angew. Chem. Int. Ed. 2018, 57, 1351-1355; Zhang et al, Energy Environ. Sci. 2018, 11, 87-93; Hayashi et al, Nat. Commun. 2019, 10, 5266; Fuchs et al, ACS Energy Letters 2020, 5, 146-151.

A high ionic conductivity not only ensures a fast Li⁺ or Na⁺ conduction between the anode and cathode, but also fulfils the realistic design of an ASSB for high loadings and current densities. Approaches to improve the ionic conductivity mainly focus on structure design and modifications in atomic scale.

Recently, lithium-ion conductivity in the range of 10⁻⁵ to 10⁻⁴ S cm⁻¹ at 50 °C has been shown for lithium arsenidotetrelates, Li₈TtAs₄ (Tt = Si, Ge) and Li₁₄TtAs₆ (Tt = Si, Ge, Sn), Pfitzner et al., Dalton Trans., 2024, 53, 11257-11263. Further, several compounds comprising lithium, scandium, phosphorous and sulphur have been described recently, i.e. monoclinic and tetragonal LiScP₂S₆ as well as Li_{2.925}Sc_{0.358}P₂S₆, showing ionic conductivities of 4.5 · 10⁻⁸, 1.2 · 10⁻⁶, and 1.2 · 10⁻³ mS cm⁻¹ at RT, respectively. Schoop et al, Zeitschrift für anorganische und allgemeine Chemie 2018, 644, 1854-1862. Dietrich et al, Chemistry of Materials 2016, 28, 8764-8773.

Lithium- and sodium-rich pnictogens have been known for a long time, whereby the compounds Li₃P, Li₃As, Li₃Sb, Li₃Bi, as well as Na₃P, Na₃As, Na₃Sb, Na₃Bi are described with regard to synthesis and structural composition; and Li₃P, Li₃As, Li₃Sb, Na₃P, Na₃As, Na₃Sb, and Na₃Bi with regard to the presence of various modifications. The compounds show very little to no lithium or sodium ion mobility as pure substances. For pnictogen compounds, for example, a value of 1 · 10⁻³ S cm⁻¹ at ambient condition was measured for Li₃N on single crystals at ambient temperature, a value of 3.0(6) · 10⁻⁸ S cm⁻¹ for microcrystalline powders of Li₃P at 50 °C, a value of 1.5(3) · 10⁻⁷ S cm⁻¹ at 50 °C for Li₃As, and a mainly electronic of nature for Na₃P. For other binaries, no values are available. U. v. Alpen, Journal of Solid State Chemistry 1979, 29, 379-392; Wegner et al, Zeitschrift für anorganische und allgemeine Chemie 2022, 648, e202100358; A. Pfitzner, Zeitschrift für anorganische und allgemeine Chemie 2022, 648, e202100358; Eickhoff et al, Zeitschrift für anorganische und allgemeine Chemie 2021, 647, 28-33.

Binary lithium- and sodium-rich chalcogens such as Li₂S, Li₂Se, Li₂Te, Na₂S, Na₂Se, and Na₂Te, have also been investigated for their synthesis and structural properties. Among these, Li₂S and Na₂S are known to have also high-pressure structural polymorphs. These binary compounds generally show intrinsic low ionic conductivity. For example, bulk Li₂S exhibits low ionic conductivity at room temperature, approximately 10⁻¹³ S cm⁻¹ (Anh Tu, T.; Phuc, N. H. H.; Anh, L. T. Q.; Toan, T. V., Preparation of Li2S-AlI3-LiI Composite Solid Electrolyte and Its Application in All-Solid-State Li-S Battery, Batteries 2023, 9(6), 290.). Regarding Li₂Se, no ionic conductivity is directly measured and reported. However, a migration energy of 0.2-0.3 eV has been reported when Li₂Se is used as a protective layer on lithium metal anodes. (Park, H.; Kim, J.; Lee, D.; Park, J.; Jo, S.; Kim, J.; Song, T.; Paik, U., Epitaxial growth of nanostructured Li2Se on lithium metal for all solid - state batteries, Advanced Science 2021, 8(11), 2004204.) Further extended investigation into Li₂S-Li₃P system has resulted in a solid solution (Li₃P)*ₓ*-(Li₂S)_{1-*x*} for 0.33 < x ≤ 0.75 which remains stable up to 125°C. The extracted solid solution conductivities reported to be are significantly higher than those of the pure end member phases Li₂S and LisP. (Szczuka, C.; Karasulu, B.; Groh, M. F.; Sayed, F. N.; Sherman, T. J.; Bocarsly, J. D.; Vema, S.; Menkin, S.; Emge, S. P.; Morris, A. J.; Grey, C. P., Forced Disorder in the Solid Solution Li3P-Li2S: A New Class of Fully Reduced Solid Electrolytes for Lithium Metal Anodes, Journal of the American Chemical Society 2022, 144(36), 16350-16365.) For Li₂Te and Na₂Te, no experimental ionic conductivity values have been reported. Study of a Na₂S single crystal has revealed an activation energy of 0.59 eV. (Bertheville, B.; Low, D.; Bill, H.; Kubel, F., Ionic conductivity of Na2S single crystals between 295 and 1350 K experimental setup and first results, Journal of Physics and Chemistry of Solids 1997, 58(10), 1569-1577). Further studies on Na₂Se reveal an ionic conductivity of 10^{- 13} S cm⁻¹ at room temperature. (Liu, Z.; Hu, W.; Deng, H., Chemistry of Defects in Crystalline Na2Se: Implications for the Na-Se Battery. The Journal of Physical Chemistry C 2020, 124(51), 27930-27936).

In previous studies on phosphides, a series of compounds with good to very good ionic conductivity was obtained in Li₃P by formal partial replacement of monovalent lithium atoms by trivalent and tetravalent atoms. These include for instance:
a) Replacement by Al, Ga, In in the structure of Li₃P leads to the general formula Li₃₋₃*ₓTrₓ*P ( *Tr* = Al, Ga, In), whereby only the existence of the compound for *x* = 0.25 and the occurrence of various modifications is certain, i.e. Li_{2.25}Al_{0.25}P ≡ β- and ω-Li₉AlP₄, Li_{2.25}Ga_{0,25}P ≡ β- and ω-Li₉GaP₄ and Li_{2.25}In_{0.25}P ≡ ω-Li₉InP₄, where ω-Li₉GaP₄ has the highest ionic conductivity of 4.5(2) · 10⁻³ S cm⁻¹. Restle et al, Advanced Functional Materials 2022, 32, 2112377; Restle et al, Angewandte Chemie International Edition 2020, 59, 5665-5674; Restle et al, Chemistry of Materials 2021, 33, 2957-2966.
b) Replacement by Si, Ge, Sn in the structure of Li₃P leads to the general formula Li₃₋₄*ₓTt*ₓP (*Tt* = Si, Ge, Sn), where the existence of the compounds is only certain for *x* = 0.25 and *x* = 0.167 (1/6) as well as the occurrence of various modifications, i.e. for *x* = 0.25: Li₂Si_{0.25}P ≡ Li₈SiP₄, Li₂Ge_{0.25}P ≡ α- and β-Li₈GeP₄, and Li₂Sn_{0.25}P ≡ α- and β- Li₈SnP₄; as well as for *x* = 0.167: Li_{2.333}Si_{0.167}P ≡ Li₁₄SiP₆, Li_{2.333}Ge_{0.167}P ≡ Li₁₄GeP₆, and Li_{2.333}Sn_{0.167}P ≡ Li₁₄SnP₆ wherein Li₁₄SiP₆ (≡Li_{7/3}Si_{1/6}P) has an ionic conductivity of 1.0 10⁻³ S cm⁻¹. Eickhoff et al, Chemistry of Materials 2018, 30, 6440-6448; Strangmüller et al, Journal of Materials Chemistry A 2021, 9, 15254-15268; Strangmüller et al, Journal of the American Chemical Society 2019, 141, 14200-14209; Strangmüller et al, Chemistry of Materials 2020, 32, 6925-6934; Toffoletti et al, Chemistry: a European journal 2016, 22, 17635-17645.

In previous studies on phosphides, a series of compounds with good ionic conductivity were obtained in Na₃P by formal partial replacement of monovalent sodium atoms by tetravalent atoms. These include for instance:
c) Replacement by Ge, Sn in the structure of Na₃P leads to the general formula Na₃₋₄*ₓTtₓ*P (*Tt* = Ge, Sn), where only the existence of the compound for *x* = 0.25 and the occurrence of various modifications is certain, i.e. for *x* = 0.25: Na₂Ge_{0.25}P ≡ Na₈GeP₄. Eickhoff et al, Zeitschrift für anorganische und allgemeine Chemie 2021, 647, 28-33; Botta et al, Zeitschrift für anorganische und allgemeine Chemie 2023, 649 (20), e202300166.

Ternary compounds that formally arise by partially replacing Li or Na with Sc in the binary lithium and sodium pnictogens, Li₃P, Li₃As, Li₃Sb, Li₃Bi and Na₃P, Na₃As, Na₃Sb, Na₃Bi, were previously unknown. Similarly, ternary compounds that formally arise by partially replacing Li or Na with Sc in the binary lithium and sodium chalcogens, Li₂S, Li₂Se, Li₂Te, Na₂S, Na₂Se, Na₂Te, were previously unknown.

There remains a need for solid-state electrolytes (SEs) with high ionic conductivity. For the application in ASSBs, it is desirable that SEs exhibit not only high ionic conductivity but also negligible electronic conductivity. Further, solid-state electrolytes with high ionic conductivity can be used for composite cathodes. Composite cathodes are cathodes composed of active materials, electronic conductive additives (typically carbon) and ionic conductive fillers, which require materials with high ionic conductivity which can provide ionic pathways.

### Summary of the invention

The invention relates to a new class of lithium- and sodium-rich solid-state compounds which additionally contain scandium and to compositions comprising mixtures of the inventive compounds. The invention further relates to a process for their preparation and their use as solid electrolytes or in composite cathodes in primary and secondary electrochemical energy storage devices. The invention further relates to composite cathodes and solid electrolytes containing the inventive compounds and compositions.

The inventive compounds contain scandium which significantly improves the ion conductivity of lithium- and sodium-rich binary solid-state compounds. In addition, the invention relates to a process for preparing the inventive compounds allowing for a comparatively simple preparation in comparison to the complex and expensive production of solid-state electrolytes frequently employed in the prior art.

The inventive compounds are of general formula (I) or general formula (II) or general formula (III):

A⁺_{(3-3*x*)}Sc³⁺*ₓ*Pn³⁻ **(I)**

A is selected from Li and Na,
Pn is selected from the group consisting of N, P, As, Sb and Bi,
*x* is in the range 0<*x*≤ 0.5

A⁺_{(2-3*y*)}Sc³⁺*_{y}*Ch²⁻ **(II)**

A is selected from Li and Na,
Ch is selected from the group consisting of S, Se and Te,
*y* is in the range 0<*y*≤ 0.5

[A⁺_{*z*(m-3*x*)+(1-*z*)(n-3*y*)}Sc³⁺_{*zx*+(1-*z*)*y*}(D1)^{m-}*_{z}*(D2)ⁿ⁻_{(1-*z*)}] **(III)**,

A is selected from Li and Na,
D1 and D2 are each selected from N, P, As, Sb, Bi, S, Se and Te, with D1 ≠ D2,
*x* is in the range 0 < *x* ≤ 0.5,
*y* is in the range 0 < *y* ≤ 0.5,
0 < z < 1,
m is 2 or 3, n is 2 or 3, wherein m and n can be the same or different.

### Brief description of the drawings

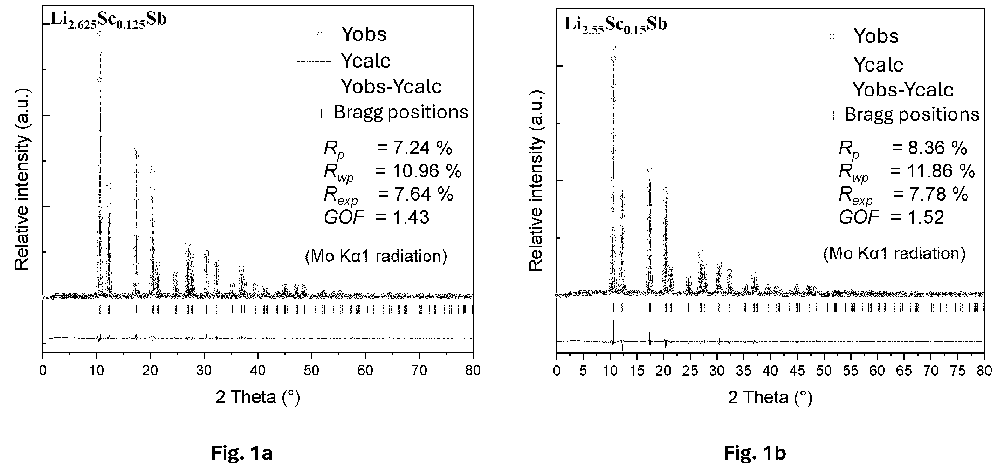

**Figure 1a****:** Rietveld analysis of the powder diffraction data (Mo K_{*α*1}, λ = 0.7093 Å) of Li_{2.625}Sc_{0.125}Sb at 298 K. The dots show the observed intensities Y_{obs}, the line behind the dots the calculated intensities Y_{calc} and the line at the bottom of the diagram the difference between the two. Vertical lines show the Bragg positions of the corresponding ternary phase.
**Figure 1b****:** Rietveld analysis of the powder diffraction data (Mo K_{*α*1}, λ = 0.7093 Å) of Li_{2.55}Sc_{0.15}Sb at 298 K. The dots show the observed intensities Y_{obs}, the line behind the dots the calculated intensities Y_{calc} and the line at the bottom of the diagram the difference between the two. Vertical lines show the Bragg positions of the corresponding ternary phase.

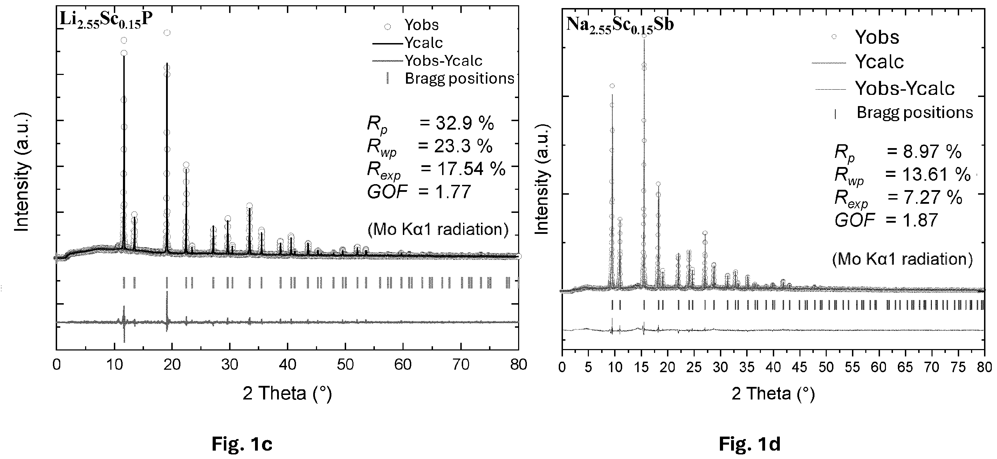

**Figure 1c****:** Rietveld analysis of the powder diffraction data (Mo K_{*α*1}, λ = 0.7093 Å) of Li_{2.55}Sc_{0.15}P at 298 K. The dots show the observed intensities Y_{obs}, the line behind the dots the calculated intensities Y_{calc} and the line at the bottom of the diagram the difference between the two. Vertical lines show the Bragg positions of the corresponding ternary phase.
**Figure 1d****:** Rietveld analysis of the powder diffraction data (Mo K_{*α*1}, λ = 0.7093 Å) of Na_{2.55}Sc_{0.15}Sb at 298 K. The dots show the observed intensities Y_{obs}, the line behind the dots the calculated intensities Y_{calc} and the line at the bottom of the diagram the difference between the two. Vertical lines show the Bragg positions of the corresponding ternary phase.

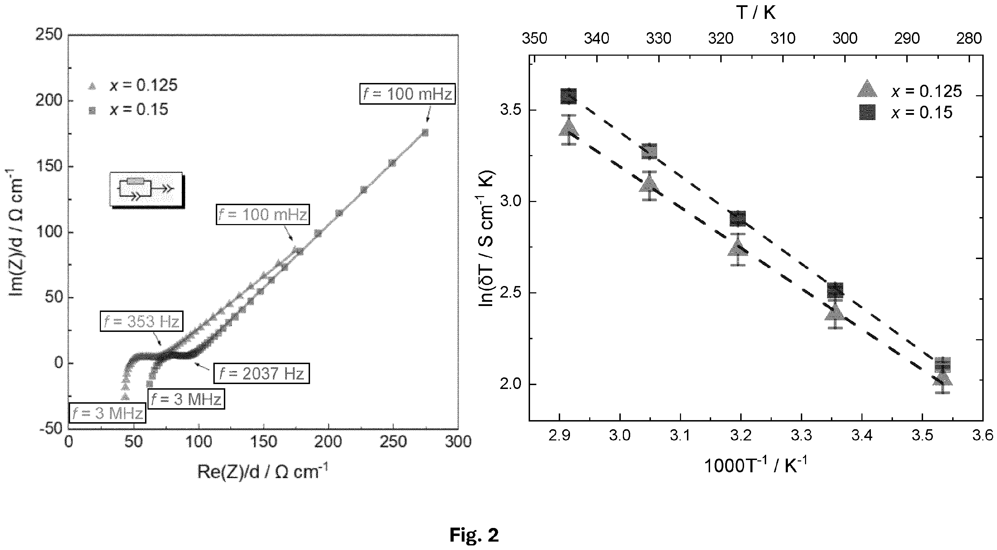

**Figure 2****:** Nyquist plot (left) and Arrhenius plots (right) of Li_{2.625}Sc_{0.125}Sb (*x* = 0.125) and Li_{2.55}Sc_{0.15}Sb (*x* = 0.15). Nyquist plot: Li_{2.625}Sc_{0.125}Sb (*x* = 0.125, triangles in the diagram) and Li_{2.55}Sc_{0.15}Sb (*x* = 0.15, squares in the diagram), measured under ion-blocking condition at 298 K. Each measurement was performed after establishing a 3 h thermal equilibrium. The semicircle coupled with the Warburg tail indicates an ionic conductive contribution from Li-ions, and the presence of an inductive tail is attributed to the cell set-up and cabling resistance. For Li_{2.625}Sc_{0.125}Sb (*x* = 0.125), fitting was performed from *f* = 353 Hz to 100 mHz; for Li_{2.55}Sc_{0.15}Sb (*x* = 0.15), fitting was performed from *f* = 2037 Hz to 100 mHz. Arrhenius plots of conductivity and temperature (σLi ·T) for Li_{2.625}Sc_{0.125}Sb (*x* = 0.125) and Li_{2.55}Sc_{0.15}Sb (*x* = 0.15) obtained in the heating and cooling branches, respectively, with error bars for each measurement based on the standard deviation from independent measurements with three cells; the shown linear fit through both branches was used to obtain the activation energy ***E_{A}^{PEIS}*** of 20.37 ± 0.61 kJ/mol (*x* =0.125) and 21.21 ± 0.48 kJ/mol (x =0.15), respectively.

### Detailed description

### I. The inventive compounds

For applications in all-solid-state batteries, solid-state electrolytes require high ionic conductivity and negligible electronic conductivity. Nevertheless, for composite cathodes, it is advantageous to include solids that possess both high ionic and electronic conductivity. So-called mixed electronic and ionic conductors (MIECs) are valuable to act not as a blocking layer (separator), but as an additive in composite cathode, which function as solid electrolytes and electronic conductive additives and might allow to work with less or without conductive carbon at the cathode. In this invention, scandium is proposed as a substitution element for the alkali metals lithium and sodium in pnictogen systems or in chalcogen systems. One equivalent of scandium replaces three equivalents of Li or Na in the compounds.

The object of the present invention is therefore to provide a new class of lithium- and sodium-rich solid-state compounds which, based on the binary compounds, enable a high lithium or sodium ion mobility and a phase-pure production of the ternary phases Li-Sc-Pn, Na-Sc-Pn, Li-Sc-Ch and Na-Sc-Ch (Pn: pnictogen, Ch: chalcogen).

This problem is solved according to the invention by partial replacement of Li and Na by Sc according to general formula (I) or general formula (II) or general formula (III):

A⁺_{(3-3*x*)}Sc³⁺*ₓ*Pn³⁻ **(I)**

A is selected from Li and Na,
Pn is selected from the group consisting of N, P, As, Sb and Bi,
*x* is in the range 0<*x*≤ 0.5

A⁺_{(2-3*y*)}Sc³⁺*_{y}*Ch²⁻ **(II)**

A is selected from Li and Na,
Ch is selected from the group consisting of S, Se and Te,
*y* is in the range 0<*y*≤ 0.5

[A⁺_{*z*(m-3*x*)+(1-*z*)(n-3*y*)}Sc³⁺_{*zx*+(1-*z*)*y*}(D1)^{m-}*_{z}*(D2)ⁿ⁻_{(1-*z*)}] **(III)**,

A is selected from Li and Na,
D1 and D2 are each selected from N, P, As, Sb, Bi, S, Se and Te, with D1 ≠ D2,
*x* is in the range 0 < *x* ≤ 0.5,
*y* is in the range 0 < *y* ≤ 0.5,
0 <*z* < 1,
m is 2 or 3, n is 2 or 3, wherein m and n can be the same or different.

In formula (III), m is the charge of D1 and n is the charge of D2. Thus, m and n can have the following values:
- when D1 is selected from N, P, As, Sb and Bi, m = 3,
- when D1 is selected from S, Se and Te, m = 2,
- when D2 is selected from N, P, As, Sb and Bi, n = 3,
- when D2 is selected from S, Se and Te, n = 2.
- when D1 and D2 are selected from the same group, i.e. both D1 and D2 are selected from the Pn group, or both D1 and D2 are selected from the Ch group, m = n,
- when D1 and D2 are selected from different groups, i.e. one of D1 and D2 is selected from the Pn group, and the other is selected from the Ch group, m ≠ n.

Thus, compounds of formula (III) encompass the following combinations of elements:
- (i) compounds comprising Li or Na, Sc and two different pnictogens, such as (Li₃₋₃ₓScₓPn1)_{z}(Li_{3-3y}Sc_{y}Pn2)_{1-z}, wherein Pn1 and Pn2 are each selected from N, P, As, Sb and Bi, with Pn1 ≠ Pn2, for example (Li₃₋₃ₓScₓP)_{z}(Li_{3-3y}Sc_{y}Sb)_{1-z} (in this case, m = n),
- (ii) compounds comprising Li or Na, Sc and two different chalcogens (in this case, m = n), and
- (iii) compounds comprising Li or Na, Sc, one pnictogen and one chalcogen (in this case, m ≠ n).

Possibility (iii) can alternatively be described by the following formula (IIIa):

[A⁺_{*z*(3-3*x*)+(1-*z*)(2-3*y*)}Sc³⁺_{*zx*+(1-*z*)*y*}Pn³⁻*_{z}*Ch²⁻_{(1-*z*)}] **(IIIa)**,

A is selected from Li and Na,
Pn is selected from the group consisting of N, P, As, Sb and Bi,
Ch is selected from the group consisting of S, Se and Te,
*x* is in the range 0 < *x* ≤ 0.5,
*y* is in the range 0 < *y* ≤ 0.5,
0 <*z* < 1.

Preferred are compounds of formula (I) and compounds of formula (III)**,** wherein D1 and D2 are each selected from N, P, As, Sb and Bi. The inventive compounds have advantageous ionic and electronic conductivities. Therefore, a new material class with superior ion conductivity is introduced here as a promising candidate for ASSB solid electrolytes and as an additive in composite cathodes.

The present invention further relates to a solid electrolyte comprising an inventive compound (according to general formula I or II or III) or a composition comprising a mixture of two or more inventive compounds. The present invention further relates to a composite cathode comprising an inventive compound (according to general formula I or II or III) or a composition comprising a mixture of two or more inventive compounds.

A "composition comprising a mixture of two or more inventive compounds" is to be distinguished from mixed compounds of formula (III). The inventive compositions are obtained by mixing respective amounts of individual compounds after solid-state synthesis, whereas the mixed compounds of formula (III) are the solid solutions obtained either from atomic-level mixing of the inventive compounds within formula I and/or formula II, or from mixing stochiometric quantities of the elements contained in formula (III) at the beginning of solid-state synthesis.

A "solid solution" refers to a homogeneous mixture of at least two, typically two, crystalline solids with similar/same crystal lattices at an atomic level, and it is one single phase. Obtaining a solid solution by mixing compounds of formula (I) and (II) on the atomic level can be achieved for instance by ball milling and/or post annealing, resulting in bond cleavage and new bond formation, thereby achieving a single phase with variation in composition. Such procedure is described in more detail in connection with the inventive process below. In comparison, a "composition comprising a mixture of two or more inventive compounds" can have two or more substances that are mixed together but not chemically combined at an atomic level.

It is to be understood that the numerical values contained in any chemical formulae given in this application include a certain numerical range. This range can be due to unavoidable inaccuracies in the synthesis of the compounds or in the analytical determination of the molar composition of the compounds. In addition, although it is possible to obtain most of the inventive compounds as phase-pure samples, the presence of side phases is not excluded.

For instance, if the chemical composition of a prepared compound is determined by Rietveld refinement of PXRD data, deviations between the nominal composition (experimentally determined) and refined composition (result from Rietveld analysis) can arise within the standard deviations (3σ rule). In addition, the formation of undetected amorphous phases can lead to deviations between the nominal composition and the results from Rietveld analysis. Further, there can be a weight loss during a multiple-step synthesis resulting in materials not exactly matching the stochiometric amounts of elements weighted at the beginning of synthesis. Finally, it is to be understood that due to the rounding of values and the inaccuracy of the crystallographically determined composition, the indicated formulae do not always match perfectly general formula (I), (II) and (III)**,** i.e. the molar amount of Li or Na is not always perfectly 3-3x or 2-3y, but matches this value within the standard deviations (3σ rule). The skilled person in the field of solid-state chemistry understands the range of compounds encompassed by the specific formulae given in this application.

Preferably, *x* is in the range 0.05 ≤ *x* ≤ 0.50, more preferably 0.05 ≤ *x* ≤ 0.25, more preferably 0.10 ≤ *x* ≤ 0.25, more preferably 0.11 < *x* ≤ 0.25, more preferably 0.11 < *x* ≤ 0.20, even more preferably 0.12 ≤ *x* ≤ 0.20. Preferably, *y* is in the range 0.05 ≤ *y* ≤ 0.50, more preferably 0.05 ≤ *y* ≤ 0.25, more preferably 0.10 ≤ *y* ≤ 0.25, more preferably 0.11 < *y* ≤ 0.25, more preferably 0.11 < *y* ≤ 0.20, even more preferably 0.12 ≤ *y* ≤ 0.20. Preferably, z is in the range 0.1 ≤ *z* ≤ 0.9, more preferably 0.2 ≤ *z* ≤ 0.8. It is assumed that a certain minimum amount of Sc is required to achieve a sufficient ionic conductivity, whereas too high amounts of Sc can lead to the formation of impurities, such as ScSb, which is due to the dissolution limit of scandium in each general formula. We did not observe any impurities in our samples when *x* < 0.2.

In formula (I), Pn is selected from the group consisting of N, P, As, Sb and Bi, preferably, P, As, Sb and Bi. From the viewpoint of ease of handling and toxicity, P and Sb are preferred, but to achieve high ionic conductivities, compounds wherein Pn is Sb, As or Bi can be preferred, too. Sb is particularly preferred. When Pn = N, it is preferred than A = Li because the preparation of these compounds is much easier than the preparation of compounds with Pn = N and A = Na.

Particularly preferred compounds of the present invention are compounds of formula (I), wherein A = Li or Na, Pn = Sb and *x* is in the range 0.05 ≤ *x* ≤ 0.50, more preferably 0.10 ≤ *x* ≤ 0.50, more preferably 0.11 < *x* ≤ 0.50, more preferably 0.11 < *x* ≤ 0.25, more preferably 0.11 < *x* ≤ 0.20 (e.g., Li_{2.625}Sc_{0.125}Sb, Li_{2.55}Sc_{0.15}Sb, Na_{2.55}Sc_{0.15}Sb). These compounds show exceptional high ionic conductivities.

Preferably, the inventive compounds have ionic conductivities above 0.1 mS/cm, more preferably above 0.25 mS/cm, more preferably above 0.3 mS/cm, more preferably above 0.5 mS/cm, more preferably above 1 mS/cm, more preferably above 5 mS/cm, more preferably above 10 mS/cm, more preferably above 20 mS/cm, more preferably above 30 mS/cm, as determined by electrochemical impedance spectroscopy (EIS) according to the experimental part below. These high ionic conductivities are preferable both for the use as solid-state electrolytes and the use in composite cathodes.

Preferably, the inventive compounds have electronic conductivities below 10 mS/cm, preferably below 5 mS/cm, as determined by direct-current (DC) polarization method according to the experimental part below.

Preferably, for use as solid-state electrolytes, the inventive compounds have electronic conductivities below 1 × 10⁻¹ mS/cm, more preferably below 1 × 10⁻² mS/cm, as determined by direct-current (DC) polarization method according to the experimental part below.

Preferably, for use in composite cathodes, the inventive compounds have electronic conductivities above 0.05 mS/cm, more preferably above 0.1 mS/cm, more preferably above 0.15 mS/cm, more preferably above 1 mS/cm, more preferable above 4 mS/cm. Preferably, for use in composite cathodes, the inventive compounds have mixed ionic and electronic conductivities above 0.05 mS/cm, more preferably above 0.1 mS/cm, more preferably above 0.15 mS/cm, more preferably above 1 mS/cm, more preferable above 4 mS/cm. The term "mixed ionic and electronic conductivities above" means that both the ionic and the electronic conductivity is higher than the indicated lower limit. For instance, the term "mixed ionic and electronic conductivities above 0.05 mS/cm" is synonymous to "ionic conductivity above 0.05 mS/cm and electronic conductivity above 0.05 mS/cm".

For use in composite cathodes, it is preferable that the electronic conductivity is comparable with the ionic conductivity so as to reach a balance for ionic and electronic conduction. Further, the ionic and the electronic conductivity of the inventive compounds should be compatible with the cathode active material. Compounds of the present invention exhibiting both high ionic and electronic conductivities, which can be named "Mixed Ionic and Electronic Conductors (MIEC)", are particularly suitable for composite cathodes as they can serve dual functions in composite cathodes, acting as 1) solid electrolyte (require high ionic conductivity) and 2) conductive additive (require high electronic conductivity). Because of the dual functions within a single material, enhancing the energy density can be expected, as well as reduction of different interfacial boundaries due to the use of single material.

Preferably, the inventive compounds have activation energies below 75 kJ/mol, more preferably below 50 kJ/mol, more preferably below 40 kJ/mol, more preferably below 35 kJ/mol, more preferably below 30 kJ/mol, as determined by electrochemical impedance spectroscopy (EIS) according to the experimental part below.

For applications in all-solid-state batteries, solid-state electrolytes require high ionic conductivity, and negligible electronic conductivity. Further advantageous properties are a high thermal stability and electrochemical stability. For composite cathodes, it is advantageous to have solids that possess both high ionic and electronic conductivity.

The different possible combinations of elements are described in more detail in the following.

### I.a. The system lithium-scandium-antimony

The incorporation of scandium into the Li-rich pnictide system leads to the formation of solid solutions for *x* ≤ 0.5, preferably *x* ≤ 0.25, with tunable ionic and electronic conductivities that depend on the scandium content. Therefore, materials with specific conductivity properties can be effectively designed by the controlled incorporation of Sc into the known pnictide system.

Li_{2.55}Sc_{0.15}Sb possesses an ionic conductivity of 42(6) mS·cm⁻¹ at 298 K, with an activation energy of 21.2 (5) kJ·mol⁻¹. Li_{2.625}Sc_{0.125}Sb possesses an ionic conductivity of 50(5) mS·cm⁻¹ at 298 K, with an activation energy of 20.4(6) kJ·mol⁻¹. Thus, these compounds represent the highest ionic conductivity among reported lithium-ion conductors. The high ionic conductivity can be explained by the formation of vacancies created by scandium substitution. Li_{2.55}Sc_{0.15}Sb maintains the structure of the parent compound β-Li₃Sb, in which Sc³⁺ ions occupy the tetrahedral voids of the Sb anion arrangement, creating vacancies by removing lithium ions from the octahedral site. Driven by the vacancy mechanism, these resulting vacancies facilitate Li⁺ ion transport by creating effective ion diffusion pathways, thus leading to enhanced ionic conductivity.

Preferably, for compounds of formula (I), wherein A = Li and Pn = Sb, *x* is in the range 0.05 ≤ *x* ≤ 0.50, more preferably 0.10 ≤ *x* ≤ 0.50, more preferably 0.11 < *x* ≤ 0.50, more preferably 0.11 < *x* ≤ 0.25, more preferably 0.11 < *x* ≤ 0.20, even more preferably 0.12 ≤ *x* ≤ 0.20.

### I.b. Formula (I) - The system lithium-scandium-phosphorous

Li_{2.55}Sc_{0.15}P possesses an ionic conductivity of 0.25(1) mS cm⁻¹ at 298 K, with an activation energy of 33.8(6) kJ mol⁻¹. The high ionic conductivity can be explained by the structural changes in the crystal structure induced by scandium substitution. Through substitution of Li with Sc in the hexagonal LisP structure, a hexagonal-to-cubic phase transition occurs, providing a desired multidimensional diffusion pathway. Additionally, the structural disorder induced by scandium incorporation further favours the ionic mobility. As a result, the ionic conductivity can be increased significantly, up to several orders of magnitude. For instance, Li_{2.55}Sc_{0.15}P shows an ionic conductivity of 0.25(1) mS cm⁻¹ in comparison to an ionic conductivity of 3.0(6) · 10⁻⁵ mS cm⁻¹ as published for microcrystalline powders of LisP at 50 °C.

Preferably, in compounds of formula (I), wherein A = Li, and Pn = P, *x* is in the range 0.05 ≤ *x* ≤ 0.25, more preferably 0.10 ≤ *x* ≤ 0.20, for example Li_{2.55}Sc_{0.15}P.

### I.c. Formula (I) - The systems lithium-scandium-nitrogen, lithium-scandium-arsenic and lithium-scandium-bismuth

Due to the ease of handling and toxicity, in the experimental part of this invention, compounds comprising P and Sb have been prepared. However, to achieve high ionic conductivities, compounds wherein Pn is N, As or Bi are preferred, too. By the partial replacement of lithium by scandium in Li₃N, Li₃As and Li₃Bi, the creation of advantageous diffusion pathways can be achieved, providing compounds of formula (I) with high ionic conductivities.

Preferably, in compounds of formula (I), wherein A = Li, and Pn = N, As or Bi, preferably As or Bi, *x* is in the range 0.05 ≤ *x* ≤ 0.25, more preferably 0.10 ≤ *x* ≤ 0.20, for example Li_{2.55}Sc_{0.15}As, Li_{2.625}Sc_{0.125}As, Li_{2.55}Sc_{0.15}Bi or Li_{2.625}Sc_{0.125}Bi.

### I.d. Formula (I) - The system sodium-scandium-antimony

Na_{2.55}Sc_{0.15}Sb possesses an ionic conductivity of 1.6 mS cm⁻¹ at 298 K, with an activation energy of 27.1(4) kJ mol⁻¹. The high ionic conductivity can be explained by the structural changes in the crystal structure induced by scandium substitution. The high-pressure cubic polymorph of Na₃Sb is stabilized by the ternary element substitution, and the resulting structural disorder enhances the overall ionic conductivity, as electrochemical investigation on Na₃Sb reveals that it is predominantly an electronic conductor (σₑ₋ = 7.3×10⁻⁶ S cm⁻¹ at 298 K). The resulting phase transition and structural disorder favour the ionic conductivity by forming a desired three-dimensional diffusion pathway for Na-ions migrating through adjacent tetrahedral and octahedral voids in the *fcc* lattice of Sb atoms, which is superior to the two-dimensional diffusion pathway exhibited by the pristine Na₃Sb with a hexagonal lattice.

Preferably, for compounds of formula (I), wherein A = Na and Pn = Sb, *x* is in the range 0.05 ≤ *x* ≤ 0.50, more preferably 0.10 ≤ *x* ≤ 0.50, more preferably 0.11 < *x* ≤ 0.50, more preferably 0.11 < *x* ≤ 0.25, more preferably 0.11 < *x* ≤ 0.20, for example Na_{2.55}Sc_{0.15}Sb or Na_{2.625}Sc_{0.125}Sb.

### I.e. Formula (I) - The system sodium-scandium-phosphorous, sodium-scandium-arsenic and sodium-scandium-bismuth

Due to the ease of handling and toxicity, in the experimental part of this invention, compounds comprising P and Sb have been prepared. However, to achieve high ionic conductivities, compounds wherein Pn is As or Bi are preferred, too. By the partial replacement of sodium by scandium in Na₃P, Na₃As and Na₃Bi, the creation of advantageous diffusion pathways can be achieved, providing compounds of formula (I) with high ionic conductivities.

Preferably, in compounds of formula (I), wherein A = Na, and Pn = P, As or Bi, *x* is in the range 0.05 ≤ *x* ≤ 0.25, more preferably 0.10 ≤ *x* ≤ 0.20, for example Na_{2.55}Sc_{0.15}As, Na_{2.625}Sc_{0.125}As, Na_{2.55}Sc_{0.15}Bi or Na_{2.625}Sc_{0.125}Bi.

Preferably, in compounds of formula (I), wherein A = Na and Pn = P, *x* is in the range 0.05 ≤ *x* ≤ 0.25, more preferably 0.10 ≤ *x* ≤ 0.20, e.g. Na_{2.55}Sc_{0.15}P or Na_{2.625}Sc_{0.125}P.

### I.f. Formula (I) - The system sodium-scandium-nitrogen

To achieve high ionic conductivities, compounds wherein A = Na and Pn = N can be advantageous. By the partial replacement of sodium by scandium in Na₃N, the creation of advantageous diffusion pathways can be achieved, providing compounds of formula (I) with high ionic conductivities. However, due to the complexity of synthesis for the system sodium-scandium-nitrogen, this system is less preferred than the system lithium-scandium-nitrogen, where synthesis is much easier.

Preferably, in compounds of formula (I), wherein A = Na, and Pn = N, *x* is in the range 0.05 ≤ *x* ≤ 0.25, more preferably 0.10 ≤ *x* ≤ 0.20.

### I.g. Formula (II)

As explained for several inventive compounds above, a high ionic conductivity is obtained by the partial replacement of lithium/sodium by scandium in binary lithium or sodium pnictogens. The incorporation of scandium results in phase transitions and/or the creation of vacancies in the crystal structure and these structural changes provide effective ion diffusion pathways. Additionally, the structural disorder induced by scandium incorporation further favours the ionic mobility. An analogous effect can be achieved by the partial replacement of lithium/sodium by scandium in Li₂S, Li₂Se, Li₂Te, Na₂S, Na₂Se and Na₂Te, providing compounds of formula (II) with high ionic conductivities, which are promising materials for ASSB solid electrolytes or as an additive in composite cathodes.

Preferably, in compounds of formula (II), *y* is in the range 0.05 ≤ *y* ≤ 0.25, more preferably 0.10 ≤ *y* ≤ 0.20.

### I.h. Formula (III)

Compounds of formula (III) represent mixed compounds, which are formally a mixture consisting of z amount of [A⁺_{(m-3*x*)}Sc³⁺*ₓ*(D1)^{m-}] and (1-*z*) amount of [A⁺_{(n-3*y*)}Sc³⁺*_{y}*(D2)ⁿ⁻], with 0 < z < 1 (according to formula I and II, whereas here D1 and D2 are selected from the set of Pn group and Ch group), resulting in the convergent general formula (III):

[A⁺_{*z*(m-3*x*)+(1-*z*)(n-3*y*)}Sc³⁺_{*zx*+(1-*z*)*y*}(D1)^{m-}*_{z}*(D2)ⁿ⁻_{(1-*z*)}] **(III)**,

A is selected from Li and Na,
D1 and D2 are each selected from N, P, As, Sb, Bi, S, Se and Te, with D1 ≠ D2,
*x* is in the range 0 < *x* ≤ 0.5,
*y* is in the range 0 < *y* ≤ 0.5,
0 <*z* < 1,
m is 2 or 3, n is 2 or 3, wherein m and n can be the same or different.

Compounds of formula (III) are obtained either from mixing of the inventive compounds at an atomic-level within formula I and/or formula II, or from stochiometric quantities of the elements contained in formula (III) and subsequent solid-state synthesis, e.g. by the inventive process. Compounds of formula (III) are to be distinguished from inventive compositions comprising two or more inventive compounds. These compositions are obtained by mixing respective amounts of individual compounds after solid-state synthesis but mixing is not at an atomic level.

It is to be understood that any indications in this application regarding the preferred chemical composition, such as preferred values for *x* and *y* and preferred elements for A, D (Pn or Ch), which are stated in connection with compounds of formula (I) and (II), are applicable also to compounds of formula (III).

### II. The inventive process

The invention also relates to a process for the preparation of solid-state compounds of the general formula (I) or (II) or (III)**,** as defined above. The compounds can be obtained by either heating the corresponding elements (in the form of powders, pieces or chunks) (method A) or ball milling of the elements and subsequent annealing of powders or pellets (methods B, C and D). For preparing compounds of formula (I) or (III) with Pn = N, N₂ can be used as the nitrogen source, but this requires a corresponding adjustment of the reaction system. Thus, for the nitrogen-containing compounds, preferably Li₃N and/or ScN, more preferably Li₃N, is used as the precursor instead of the corresponding elements. For preparing compounds of formula (III), starting materials can be either elements following the methods A, B, C or D, or precursors derived from the inventive compounds of formula (I) and/or formula (II). In the latter case, compounds of formula (I) and/or formula (II)) are used as starting materials instead of the corresponding elements in step 1.

The inventive process comprises the following steps:
1. Mixing starting materials containing stoichiometric quantities of the elements contained in formula (I), formula (II) or formula (III) in an inert gas atmosphere to obtain a mixture,
   The starting materials used in step 1 can be the respective chemical elements, e.g. elemental lithium, elemental scandium and elemental antimony. Using the elements as starting material is preferred for compounds of formula (II) and for compounds of formula (I), wherein Pn ≠ N. For compounds of formula (I), wherein Pn = N, the starting materials are preferably solid compounds comprising the required elements. For instance, for nitrogen-containing compounds, preferably Li₃N and/or ScN, more preferably Li₃N, is used as starting material. For preparing compounds of formula (III), the starting materials can be the respective chemical elements or solid compounds comprising the required elements. In addition, for compounds of formula (III), the starting materials can be compounds of formula (I) and/or (II). It is to be understood that different kinds of starting materials can be combined, e.g. for preparing a compound comprising Li, Sc and N, elemental Sc can be combined with LisN.
   The particles of the obtained mixture can be in any suitable shape, e.g. the obtained mixture can be a mixture of powder particles, a mixture of pieces or a mixture of chunks.

Optionally, the inventive process comprises one of the following steps 2a, 2b and 2c:
2a. Grinding the mixture obtained in step 1 in a ball mill under an inert gas atmosphere to obtain a ground powder (method B), or
2b. Pressing the mixture obtained in step 1 into pellets (compacts) under an inert gas atmosphere (method C), or
2c. Grinding the mixture obtained in step 1 in a ball mill under an inert gas atmosphere to obtain a ground powder and subsequently, pressing the obtained ground powder into pellets (compacts) under an inert gas atmosphere (method D), and
3. Heating the mixture obtained in step 1 (Method A) or the pellets or the ground powder obtained in step 2 to temperatures between 400°C and 900°C for a period of a few hours to 10 days in an inert gas atmosphere.

When compounds of formula (III) are prepared by using compounds of formula (I) or (II) as starting materials in step 1, thorough milling is required before the heating step, i.e. in this case, either step 2a or step 2c is mandatory, followed by step 3. In other words, in this case, compounds of formula (III) are prepared according to method B or D.

The term "powder" means fine, small particles of a material with a typical size range of less than 100 µm, preferably particles with an average diameter of 1 µm to 100 µm, which can be determined by laser diffraction, dynamic light scattering (DLS) or sieve analysis.

The term "pieces" means particles larger than powder particles, i.e. particles of a material larger than 100 µm, preferably particles with an average diameter of 100 µm to 10 mm, preferably 1 mm to 10 mm, which can be determined for instance by sieve analysis.

The term "chunks" means particles larger than pieces, i.e. particles of a material larger than 10 mm, preferably particles with an average diameter of 10 mm to 1 cm, which can be determined for instance by sieve analysis.

Thus, method A comprises the following steps:
- Mixing the starting materials containing stoichiometric quantities of the elements in an inert gas atmosphere to obtain a mixture,
- Heating the mixture, e.g. powder/pieces/chunk mixture, to temperatures between 400°C and 900°C for a period of a few hours to 10 days in an inert gas atmosphere.

Thus, method B comprises the following steps:
- Mixing the starting materials containing stoichiometric quantities of the elements in an inert gas atmosphere to obtain a mixture,
- Grinding the mixture in a ball mill under an inert gas atmosphere to obtain a ground powder, and
- Heating the ground powder to temperatures between 400°C and 900°C for a period of a few hours to 10 days in an inert gas atmosphere.

Thus, method C comprises the following steps:
- Mixing the starting materials containing stoichiometric quantities of the elements, preferably in the form of powders, in an inert gas atmosphere to obtain a mixture,
- Pressing the resulting mixture, preferably powder mixture, into pellets (compacts) under an inert gas atmosphere, and
- Heating the pellets to temperatures between 400°C and 900°C for a period of a few hours to 10 days in an inert gas atmosphere.

In method C, the mixture obtained in step 1 is preferably a powder mixture to facilitate pressing the mixture into pellets.

Method D combines the steps of methods B and C. Preferably, the inventive process comprises method D, i.e. step 2c.

The process according to the invention provides good phase purity of the crystalline compounds and enables simple process control.

### Step 1

In step 1, starting materials containing stoichiometric quantities of the elements contained in formula (I), formula (II) or formula (III) are mixed in an inert gas atmosphere. As described above, the starting materials can be the chemical elements or compounds comprising the respective elements. In many cases, the inventive compounds can be synthesized directly from the elements. Suitable inert gases are known to the skilled person and preferably, step 1 is performed under argon atmosphere.

### Step 2

In one variant of step 2 (step 2a), the (powder) mixture obtained in step 1 is ground in a ball mill under an inert gas atmosphere. Preferably, a high-energy mechanical ball milling process is used. A suitable grinding speed is 300 - 400 rpm, e.g. 350 rpm, and a suitable grinding time is 18-36 h. Preferably, grinding intervals of around 10 min alternate with around 5 min breaks. Suitable milling conditions and a suitable ball mill are known to the skilled person and for instance, a tungsten carbide milling set can be used.

In one variant of step 2 (step 2b), the (powder) mixture obtained in step 1 is pressed into pellets (compacts) under an inert gas atmosphere. The size and shape of the pellets is not limited, but for instance, disk-shaped pellets with a diameter of 5 to 15 mm, e.g. 10 mm, are suitable, corresponding to a pellet mass of several hundred milligrams to several grams. A suitable press for preparing the pellets is known to the skilled person and for instance, a hydraulic press with a pressure of 250 to 350 MPa and a pressure time for 0.5 to 2 minutes can be used.

In one variant of step 2 (step 2c), the (powder) mixture obtained in step 1 is first ground, as described for step 2a above, and then pressed into pellets, as described for step 2b above.

Suitable inert gases are known to the skilled person and preferably, step 2 is performed under argon atmosphere.

### Step 3

In step 3, either the mixture from step 1 is directly heated to temperatures between 400°C and 900°C for a period of a few hours to 10 days in an inert gas atmosphere, or the pellets or the ground powder obtained in step 2 are heated to temperatures between 400°C and 900°C for a period of a few hours to 10 days in an inert gas atmosphere.

Suitable inert gases are known to the skilled person and preferably, step 3 is performed under argon atmosphere. Further, suitable equipment for this step is known to the skilled person. For instance, the pellets/powder can be loaded into suitable containers, e.g. sealed tantalum crucibles, and the sealed containers are heated in a suitable furnace, e.g. within evacuated quartz reaction tubes in a tube furnace.

Preferably, the heating in step 3 is carried out at a temperature between 500°C and 900°C, more preferably between 600°C and 900°C, more preferably between 700°C and 900°C, more preferably between 750°C and 850°C. For instance, the heating in step 3 is carried out around 800°C. Preferably, the heating in step 3 is carried out for a duration of 1 day to 8 days, more preferably 2 days to 6 days, more preferably 2 days to 4 days. For instance, the heating in step 3 is carried out for a duration of 3 days. Preferably, at the end of the heating duration, the obtained compounds are rapidly quenched, e.g. by quenching the hot tantalum crucibles in water.

### III. The inventive use

The solid-state compounds of general formula (I), general formula (II) and general formula (III) according to the invention, as described above, can preferably be used as lithium-ion electrolytes, particularly as lithium-ion electrolytes for primary and secondary electrochemical energy storage devices, or in composite cathodes for primary and secondary electrochemical energy storage devices; or can preferably be used as sodium-ion electrolytes, particularly as sodium-ion electrolytes for primary and secondary electrochemical energy storage devices or in composite cathodes for primary and secondary electrochemical energy storage devices.

"Lithium-ion electrolytes" and "sodium-ion electrolytes" are ionic conductive materials used in lithium-ion batteries to transport lithium ions between the anode and cathode during charging and discharging. While typical electrolytes of the prior art are often liquid or gel-like and typically consist of lithium or sodium salts dissolved in organic solvents, the lithium-ion electrolytes and sodium-ion electrolytes of the present invention are solid electrolytes.

"Composite cathodes" are cathodes composed of active materials, electronic conductive additives and ionic conductive fillers such as solid-state electrolytes which can provide ionic pathways. Composite cathodes are used as the positive electrode (cathode) in primary and secondary electrochemical energy storage devices.

"Primary electrochemical energy storage devices" are non-rechargeable batteries designed for single use. They store energy chemically and convert it to electrical energy during discharge. Once depleted, they cannot be recharged. A preferred example according to the present invention are primary ASSBs.

"Secondary electrochemical energy storage devices" are rechargeable batteries that can undergo multiple charge and discharge cycles. They store energy chemically and are designed for repeated use. A preferred example according to the present invention are secondary ASSBs.

All-solid-state batteries (ASSBs) are batteries that use solid electrolytes instead of liquid or gel electrolytes to transport ions between the anode and cathode. This design offers improved safety, higher energy density, and better thermal stability compared to conventional batteries.

Preferably, the inventive compounds are used as solid electrolytes or in composite cathodes in ASSBs in electric vehicles and other energy storage applications.

### Examples

### I. Synthesis of materials

### Example 1. Preparation of the compound Li₃₋₃ₓScₓSb, with x = 0.125.

For **Li_{3-3*x*}Sc*ₓ*Sb,** the starting materials Li, Sc and Sb are weighed in a stoichiometric ratio for *x* = 0.125 under an argon inert gas atmosphere and ground in a ball mill (e.g. Retsch PM100 planetary ball mill, 350 rpm, 18 h, 10 min interval, 5 min break) using a tungsten carbide grinding set (50 mL vessel with 3 WC balls, Ø 15 mm). The reactive mixture obtained is pressed with a hydraulic press (Specac Atlas 15T) under a pressure of 294.2 MPa (3 T) for 5 min to form pellets of approx. 0.5 g with a diameter of 10 mm and then filled into tantalum crucibles, which were sealed in an electric arc furnace (Edmund Bühler MAM1). The crucibles thus obtained are enclosed in evacuated quartz reaction tubes and heated in a tube furnace (e.g. HTM Reetz Loba 1200-42-600-1-OW with a EUROTHERM S 14083 temperature controller) at 870 °C for 48 hours, followed by quenching of the hot Ta crucibles in water. After crushing the broken blocks, a gray-black powder is obtained. Phase-pure compounds are obtained. The sample was analysed with PXRD (Figure 1a).

### Example 2. Preparation of the compound Li₃₋₃ₓScₓSb, with x = 0.15.

For **Li_{3-3*x*}Sc*ₓ*Sb,** the starting materials Li, Sc and Sb are weighed in a stoichiometric ratio for *x* = 0.15 under an argon inert gas atmosphere and ground in a ball mill (e.g. Retsch PM100 planetary ball mill, 350 rpm, 18 h, 10 min interval, 5 min break) using a tungsten carbide grinding set (50 mL vessel with 3 WC balls, Ø 15 mm). The reactive mixture obtained is pressed with a hydraulic press (Specac Atlas 15T) under a pressure of 294.2 MPa (3 T) for 5 min to form pellets of approx. 0.5 g with a diameter of 10 mm and then filled into tantalum crucibles, which were sealed in an electric arc furnace (Edmund Bühler MAM1). The crucibles thus obtained are enclosed in evacuated quartz reaction tubes and heated in a tube furnace (e.g. HTM Reetz Loba 1200-42-600-1-OW with a EUROTHERM S 14083 temperature controller) at 870 °C for 48 hours, followed by quenching of the hot Ta crucibles in water. After crushing the broken blocks, a gray-black powder is obtained. Phase-pure compounds are obtained. The sample was analysed with PXRD (Figure 1b).

### Example 3. Preparation of the compound Li₃₋₃ₓScₓP, with x = 0.15.

For Li_{3-3*x*}Sc*ₓ*P, the starting materials Li, Sc and P are weighed in a stoichiometric ratio for *x* = 0.15 under an argon inert gas atmosphere and ground in a ball mill (e.g. Retsch PM100 planetary ball mill, 350 rpm, 18 h, 10 min interval, 5 min break) using a tungsten carbide grinding set (50 mL vessel with 3 WC balls, Ø 15 mm). The reactive mixture obtained is pressed with a hydraulic press (Specac Atlas 15T) under a pressure of 294.2 MPa (3 T) for 5 min to form pellets of approx. 0.5 g with a diameter of 10 mm and then filled into tantalum crucibles, which were sealed in an electric arc furnace (Edmund Bühler MAM1). The crucibles thus obtained are enclosed in evacuated quartz reaction tubes and heated in a tube furnace (e.g. HTM Reetz Loba 1200-42-600-1-OW with a EUROTHERM S 14083 temperature controller) at 800 °C for 48 hours, followed by quenching of the hot Ta crucibles in water. After crushing the broken blocks, a reddish-brown powder is obtained. Phase-pure compounds are obtained. The sample was analysed with PXRD (Figure 1c).

### Example 4. Preparation of the compound Na₃₋₃ₓScₓSb, with x = 0.15.

For Na_{3-3*x*}Sc*ₓ*Sb, the starting materials Na, Sc and Sb are weighed in a stoichiometric ratio for *x* = 0.15 under an argon inert gas atmosphere and ground in a ball mill (e.g. Retsch PM100 planetary ball mill, 350 rpm, 18 h, 10 min interval, 5 min break) using a tungsten carbide grinding set (50 mL vessel with 3 WC balls, Ø 15 mm). The reactive mixture obtained is pressed with a hydraulic press (Specac Atlas 15T) under a pressure of 294.2 MPa (3 T) for 5 min to form pellets of approx. 0.5 g with a diameter of 10 mm and then filled into tantalum crucibles, which were sealed in an electric arc furnace (Edmund Bühler MAM1). The crucibles thus obtained are enclosed in evacuated quartz reaction tubes and heated in a tube furnace (e.g. HTM Reetz Loba 1200-42-600-1-OW with a EUROTHERM S 14083 temperature controller) at 870 °C for 48 hours, followed by quenching of the hot Ta crucibles in water. After crushing the broken blocks, a gray-black powder is obtained. Phase-pure compounds are obtained. The sample was analysed with PXRD (Figure 1d).

### II. Analytical methods

### Powder X-ray diffraction

Examples 1-4 were analysed by PXRD. Powder diffraction data were collected on a STOE Stadi P diffractometer (Ge(111) monochromator, Mo *K*_{*α*1} radiation, 0.7093 Å) with a Dectris MYTHEN 1K detector in Debye-Scherrer geometry at room temperature. Samples were sealed in glass capillaries (Ø 0.3 mm) by wax for measurement. Raw data were processed with the WinXPOW software.

### Electrochemical Impedance Spectroscopy (EIS) and Direct-Current (DC) Polarization Methods

For the compounds prepared in Examples 1-4, the ionic conductivity was determined by electrochemical impedance spectroscopy (EIS) in RHD CompreCell (Model no.: 840324). The powdered samples (300 - 500 mg) were separately placed between two stainless-steel dies and pressed into pellets with a diameter of 6 mm and a thickness between 5.3 to 8.7 mm by applying a pressure of 381.3 MPa for approximately 5 min, leading to a compact density of ~ 85%. The above processes were performed in an Ar-filled glove box (MBraun) to exclude the impact of air and moisture. Subsequently, the RHD cell was enclosed in an in-house designed metal clamping system to ensure good contact of the cell and an air-tight atmosphere. The corresponding fabrication pressure was set at 150 MPa by fastening the screws of three springs. Prior to EIS measurements, the cell rested for 12 h to allow for thermal equilibration.

The impedance data were collected by Bio-Logic potentiostat (VSP-300) in a frequency range from 3 MHz to 100 mHz at a potential perturbation of ±10 mV. Data were analyzed by using the software EC-Lab (V 11.36). The measurements were performed in an Ar-filled glovebox at 25 °C. The electronic conductivity was determined with the same set-up using a potentiostatic direct-current (DC) polarization applying voltages of 50, 100, and 150 mV for 7 h each. For determining the activation energy of lithium- and sodium-ion conduction, the cell temperature was set to 10, 25, 40, 55 and 70 °C using a climate chamber (ES-PEC, LU-114). EIS measurements were performed during heating and cooling cycles. Temperature-dependent EIS measurements were carried out inside the glovebox. All data were obtained from three independently measured cells, and the reported errors represent the standard deviation of conductivities obtained for these three cells.

The obtained Nyquist and Arrhenius plots for Examples 1 and 2 are shown in Figure 2. The obtained values for ionic conductivity, electronic conductivity and activation energy are summarized in Table 1 below.

**Table 1: Properties of inventive compounds.**

| Ex. | Compound | ionic conductivity (mS/cm) at room temperature | electronic conductivity (mS/cm) at room temperature | activation energy ***E_{A}^{PEIS}*** (kJ/mol) |
|---|---|---|---|---|
| 1 | Li_{2.625}Sc_{0.125}Sb (x = 0.125, Pn = Sb) | 50(5) | 4.18 | 20.4(6) |
| 2 | Li_{2.55}Sc_{0.15}Sb (x = 0.15, Pn = Sb) | 42(6) | 0.203 | 21.2(5) |
| 3 | Li_{2.55}Sc_{0.15}P (x = 0.15, Pn = P) | 0.25(1) | 2.8(9) x 10⁻⁵ | 33.8(6) |
| 4 | Na_{2.55}Sc_{0.15}Sb (x = 0.15, Pn = Sb) | 1.63 | 4.04 x 10⁻³ | 27.1(4) |

Examples 3 and 4 show high ionic conductivity and negligible electronic conductivity. Thus, these compounds are promising materials for ASSB solid electrolytes. Examples 1 and 2 show comparably high ionic and electronic conductivity, making them promising candidates for use in composite cathodes. The use of materials with mixed and comparably high ionic and electronic conductivities in composite cathodes is particularly advantageous as it enhances the power densities for a thick cathode configuration, mitigates the additional interfacial resistance while reducing the need for a large portion of carbon, which has been reported to be detrimental in ASSBs. In comparison to scandium free binary parent compounds, an increase in ionic conductivity by several orders of magnitude is achieved (for instance, Li_{2.55}Sc_{0.15}P shows an ionic conductivity of 0.25(1) mS cm⁻¹ in comparison to an ionic conductivity of 3.0(6) · 10⁻⁵ mS cm⁻¹ as published for microcrystalline powders of LisP at 50 °C). In comparison to the quaternary compound Li_{2.925}Sc_{0.358}P₂S₆, an increase in ionic conductivity by several orders of magnitude is achieved (Li_{2.55}Sc_{0.15}P shows an ionic conductivity of 0.25(1) mS cm⁻¹ in comparison to an ionic conductivity of 1.2 · 10⁻³ mS cm⁻¹ as published for Li_{2.925}Sc_{0.358}P₂S₆). The ionic conductivity obtained for Example 3 comprising phosphorous is slightly lower than for Examples 1, 2 and 4 comprising antimony.

The high ionic conductivity and low activation energy barrier of inventive examples further underscore their potential for use in ASSBs, particularly under low temperatures.

## Claims

1. A compound of formula (I), formula (II) or formula (III):
A⁺_{(3-3*x*)}Sc³⁺*ₓ*Pn³⁻ (I)
A is selected from Li and Na,
Pn is selected from the group consisting of N, P, As, Sb and Bi,
*x* is in the range 0 < *x* ≤ 0.5,
A⁺_{(2-3*y*)}Sc³⁺*_{y}*Ch²⁻ (II)
A is selected from Li and Na,
Ch is selected from the group consisting of S, Se and Te,
*y* is in the range 0 < *y* ≤ 0.5.
[A⁺_{*z*(m-3*x*)+(1-*z*)(n-3*y*)}Sc³⁺_{*zx*+(1-*z*)*y*}(D1)^{m-}*_{z}*(D2)ⁿ⁻_{(1-*z*)}] (III)**,**
A is selected from Li and Na,
D1 and D2 are each selected from N, P, As, Sb, Bi, S, Se and Te, with D1 ≠ D2,
*x* is in the range 0 < *x* ≤ 0.5,
*y* is in the range 0 < *y* ≤ 0.5,
0 <*z* < 1,
m is 2 or 3, n is 2 or 3, wherein m and n can be the same or different.

2. The compound according to claim 1, wherein
*x* is in the range 0.05 ≤ *x* ≤ 0.50, preferably 0.05 ≤ *x* ≤ 0.25, more preferably 0.10 ≤ *x* ≤ 0.25, more preferably 0.11 < *x* ≤ 0.25, more preferably 0.11 < *x* ≤ 0.20, and/or
*y* is in the range 0.05 ≤ *y* ≤ 0.50, preferably 0.05 ≤ *y* ≤ 0.25, more preferably 0.10 ≤ *y* ≤ 0.25, more preferably 0.11 < *y* ≤ 0.25, more preferably 0.11 < *y* ≤ 0.20.

3. The compound according to claim 1 or 2, wherein the compound is of formula (I), and Pn is selected from the group consisting of P, As, Sb and Bi, more preferably Sb, As and Bi, more preferably Sb.

4. The compound according to any of claims 1 to 3, wherein the compound is of formula (I), A = Li or Na, Pn = Sb and *x* is in the range 0.05 ≤ *x* ≤ 0.50, more preferably 0.10 ≤ *x* ≤ 0.50, more preferably 0.11 < *x* ≤ 0.50, more preferably 0.11 < *x* ≤ 0.25, more preferably 0.11 < *x* ≤ 0.20.

5. The compound according to claim 4, which is selected from the group consisting of Li_{2.625}Sc_{0.125}Sb, Li_{2.55}Sc_{0.15}Sb and Na_{2.55}Sc_{0.15}Sb.

6. The compound according to any of claims 1 to 3, wherein the compound is of formula (I), A = Li or Na, Pn = P and *x* is in the range 0.05 ≤ *x* ≤ 0.50, more preferably 0.05 ≤ *x* ≤ 0.25, more preferably 0.10 ≤ *x* ≤ 0.20.

7. The compound according to claim 6, which is selected from the group consisting of Li_{2.55}Sc_{0.15}P and Na_{2.55}Sc_{0.15}P.

8. The compound according to any of claim 1 to 7, wherein the compound has an ionic conductivity above 0.1 mS/cm, preferably above 0.25 mS cm⁻¹, as determined by electrochemical impedance spectroscopy (EIS).

9. The compound according to any of claim 1 to 8, wherein the compound has an activation energy below 75 kJ mol⁻¹, preferably below 35 kJ mol⁻¹, as determined by electrochemical impedance spectroscopy (EIS).

10. The compound according to any of claim 1 to 9, wherein the compound has an electronic conductivity below 10 mS/cm, preferably below 5 mS/cm, as determined by direct-current (DC) polarization method.

11. A composition comprising a mixture of two or more compounds according to any of claims 1 to 10.

12. A solid electrolyte or an additive in a composite cathode comprising a compound according to any of claims 1 to 10 or a composition according to claim 11.

13. A process for the preparation of a compound according to any of claims 1 to 10 comprising the following steps:
1. Mixing starting materials containing stoichiometric quantities of the elements contained in formula (I), formula (II) or formula (III) in an inert gas atmosphere to obtain a mixture,
2a. optionally, grinding the powder mixture obtained in step 1 in a ball mill under an inert gas atmosphere to obtain a ground powder, or
2b. optionally, pressing the mixture obtained in step 1 into pellets under an inert gas atmosphere, or
2c. optionally, grinding the mixture obtained in step 1 in a ball mill under an inert gas atmosphere to obtain a ground powder and subsequently, pressing the obtained ground powder into pellets under an inert gas atmosphere, and
3. Heating the mixture obtained in step 1 or the pellets or the ground powder obtained in step 2 to temperatures between 400°C and 900°C for a period of a few hours to 10 days in an inert gas atmosphere.

14. The process according to claim 13, wherein the heating in step 3 is carried out at a temperature between 700°C and 900°C for a duration of 2 days to 4 days.

15. Use of a compound according to any of claims 1 to 10 or of the composition according to claim 11 as a solid electrolyte or as an additive in a composite cathode in primary or secondary electrochemical energy storage devices, particularly in all-solid-state batteries (ASSBs).
